# EUROPEAN PATENT APPLICATION

(11) **EP 2 351 664 A1**
(43) Date of publication of application: **03.08.2011**
(21) Application number: 09823678.9
(22) Date of filing: 29.10.2009
(51) Int. Cl.: B60N 2/48, A47C 7/38

(54) **HEADREST POSITION ADJUSTMENT DEVICE AND HEADREST POSITION ADJUSTMENT METHOD**

(30) Priority: 29.10.2008 JP 2008278086
(71) Applicant: FUJIKURA LTD., Tokyo 135-8512 (JP)
(72) Inventor: YAMAGUCHI, Yuichiro, Sakura-shi Chiba 285-8550 (JP); SAKURAI, Ryohei, Sakura-shi Chiba 285-8550 (JP); ICHIHARA, Koichi, Sakura-shi Chiba 285-8550 (JP)
(74) Representative: Grünecker, Kinkeldey, Stockmair & Schwanhäusser Anwaltssozietät
(86) International application number: PCT/JP2009/068616
(87) International publication number: WO 2010/050568

(57) **Abstract**

To highly precisely adjust a position of a headrest automatically and to an appropriate condition with simple configuration, when the distance between the headrest 43 and a head 49a is within a certain range, a detecting circuit 20 of a headrest position adjustment device calculates an estimated height-direction center position of the head 49a based on sensing signals from a plurality of sensing electrodes 11 to 15. Based on the calculated value, the detecting circuit 20 detects the height position of the head 49a. When the distance between the headrest 43 and the head 49a is not within the certain range, the detecting circuit 20 detects the height position of the head 49a based on sensing signals from at least the sensing electrode 11 located at a lowermost position and the sensing electrode 15 located at an uppermost position among the plurality of sensing electrodes 11 to 15.

## Description

### Technical Field

The present invention relates to a headrest position adjustment device and a headrest position adjustment method which adjust a position of a headrest provided on a seat of a vehicle such as an automobile. Particularly, the present invention relates to a headrest position adjustment device and a headrest position adjustment method which can highly precisely adjust a position of a headrest automatically and to an appropriate condition with a simple configuration.

### Background Art

For example, the followings have been conventionally known as techniques for adjusting a position of a headrest provided on a seat of a vehicle such as an automobile. That is, a headrest drive control device disclosed in Patent Document 1 identified below monitors the capacitance between a pair of sensing electrodes which are embedded in a ceiling portion of the vehicle and in the headrest. The device adjusts the vertical position of the headrest by judging the height position of the head of a person sitting on the seat based on an amount of a change of the capacitance that occurs when performing scanning by driving the headrest in the upward direction from a lower end.

A device for adjusting a headrest disclosed in Patent Document 2 identified below includes two or three capacitor plates which are arranged in the headrest. The device adjusts the headrest to an appropriate height by measuring the value of capacitance between a head and each capacitor plate.

A headrest adjustment device disclosed in Patent Document 3 identified below includes one sensing electrode which is arranged in the headrest and monitors the capacitance between the headrest and a head. The device adjusts the headrest by judging the height position of the head of a person sitting on the seat based on an amount of a change of the capacitance that occurs when performing scanning by moving the headrest in the upward and downward direction.

- [Patent Document 1]: JPS64-11511A
- [Patent Document 2]: JP2000-309242A
- [Patent Document 3]: JPH11-180200A

### Disclosure of Invention

### Problem to be Solved by the Invention

However, the devices disclosed in Patent Documents 1 to 3 identified above perform scanning by moving the headrest. Because of this, when, for example, the head of a person sitting on the seat gets swung in the frontward and rearward direction, the adjustment position of the headrest in the upward and downward direction might become wrong. There is also a problem that the data processing load to be imposed on a control unit (e.g., an ECU (Electronic Control Unit), etc.) which is in charge of adjusting the position of the headrest becomes heavy.

The devices disclosed in Patent Documents 1 to 3 identified above estimate the position of a head based on a change of outputs from the capacitance sensors provided (based on a change of the values of capacitances corresponding to the non-flatness of the occipital region of the head). However, there is a problem that when the head exists at a position far from the sensors, the output changes become small, making it impossible to clearly sense the non-flatness of the occipital region.

Moreover, the device disclosed in Patent Document 1 identified above needs to have a sensing electrode provided in a ceiling portion of the vehicle. Therefore, there is a problem that the whole system cannot be contained within the headrest and becomes complicated and costly.

The present invention was made in view of such problems, and aims for providing a headrest position adjustment device and a headrest position adjustment method which can highly precisely adjust the position of a headrest automatically and to an appropriate condition with a simple configuration.

### Means for Solving the Problem

A headrest position adjustment device according to the present invention comprises: a headrest which is set behind a head of a person sitting on a seat; a plurality of sensing electrodes which are provided side by side along a height direction of the headrest and which sense capacitance between the head of the person and the headrest; a detecting circuit which detects a height position of the head with respect to the headrest based on values of capacitances sensed by the plurality of sensing electrodes respectively; and position adjusting means which adjusts an upward/downward-direction position of the headrest based on a detection result of the detecting circuit, wherein when a distance between the headrest and the head is within a certain range, the detecting circuit calculates an estimated center position of the head based on the values of capacitances sensed by the plurality of sensing electrodes, and based on a calculated value, detects the height position of the head with respect to the headrest, and when the distance between the headrest and the head is not within the certain range, the detecting circuit detects the height position of the head with respect to the headrest based on a ratio between the values of capacitances sensed by at least the sensing electrode located at an uppermost position and the sensing electrode located at a lowermost position among the plurality of sensing electrodes.

A headrest position adjustment method according to the present invention comprises: sensing capacitance between a head of a person sitting on a seat and a headrest by a plurality of sensing electrodes which are arranged side by side along a height direction of the headrest; when a distance between the headrest and the head is within a certain range, calculating an estimated center position of the head based on values of capacitances sensed by the plurality of sensing electrodes respectively, and based on a calculated value, detecting a height position of the head with respect to the headrest; when the distance between the headrest and the head is not within the certain range, detecting the height position of the head with respect to the headrest based on a ratio between the values of capacitances sensed by at least the sensing electrode located at an uppermost position and the sensing electrode located at a lowermost position among the plurality of sensing electrodes; and adjusting an upward/downward-direction position of the headrest based on the detected height position of the head with respect to the headrest.

As described above, the headrest position adjustment device and the headrest position adjustment method according to the present invention select an appropriate scheme for detecting the height position of the head based on the distance between the headrest and the head. Therefore, the device and method can highly precisely adjust the position of the headrest with respect to the head automatically and to an appropriate condition with a simple configuration. Since the position of the headrest with respect to the head can be adjusted in this way, accidents due to, for example, failure to adjust the position of the headrest, such as cervical spine injury of a vehicle occupant in a car crash or the like, can be prevented.

In the present invention, when the smallest value among the values of capacitances sensed by the plurality of sensing electrodes is equal to or greater than a threshold, the detecting circuit may judge that the distance between the headrest and the head is within the certain range, and when the smallest value is smaller than the threshold, the detecting circuit may judge that the distance between the headrest and the head is not within the certain range.

The detecting circuit may calculate an estimated center position of the head based on the values of capacitances sensed by the plurality of sensing electrodes and based on a calculated value, may detect the height position of the head with respect to the headrest, while at the same time detecting the height position of the head with respect to the headrest based on a ratio between the values of capacitances sensed by at least the sensing electrode located at an uppermost position and the sensing electrode located at a lowermost position among the plurality of sensing electrodes. When both detected values are equal or an error between the detected values is within a predetermined range, the detecting circuit may judge that the distance between the headrest and the head is within the certain range. When the error between the detected values is greater than the predetermined range, the detecting circuit may judge that the distance between the headrest and the head is not within the certain range.

The headrest position adjustment device according to the present invention may further comprise distance measuring means which measures the distance between the headrest and the head, and the detecting circuit may judge whether the distance between the headrest and the head is within the certain range or not based on a value measured by the distance measuring means.

In the present invention, when the distance between the headrest and the head is not within the certain range, the detecting circuit may detect the height position of the head with respect to the headrest based on a ratio between the values of capacitances sensed by the sensing electrode located at an uppermost position and a certain number of sensing electrodes counted from this sensing electrode and the values of capacitances sensed by the sensing electrode located at a lowermost position and the certain number of sensing electrodes counted from this sensing electrode.

It is preferred that each of the plurality of sensing electrodes be formed into a rectangular strip shape, and arranged in a front portion of the headrest such that its longer direction is orthogonal to the height direction of the headrest.

### Effect of the Invention

According to the present invention, it is possible to provide a headrest position adjustment device and a headrest position adjustment method which can highly precisely adjust a position of a headrest automatically and to an appropriate condition with a simple configuration.

### Best Mode for Carrying Out the Invention

A preferred embodiment of a headrest position adjustment device and a headrest position adjustment method according to the present invention will be explained below with reference to the attached drawings.

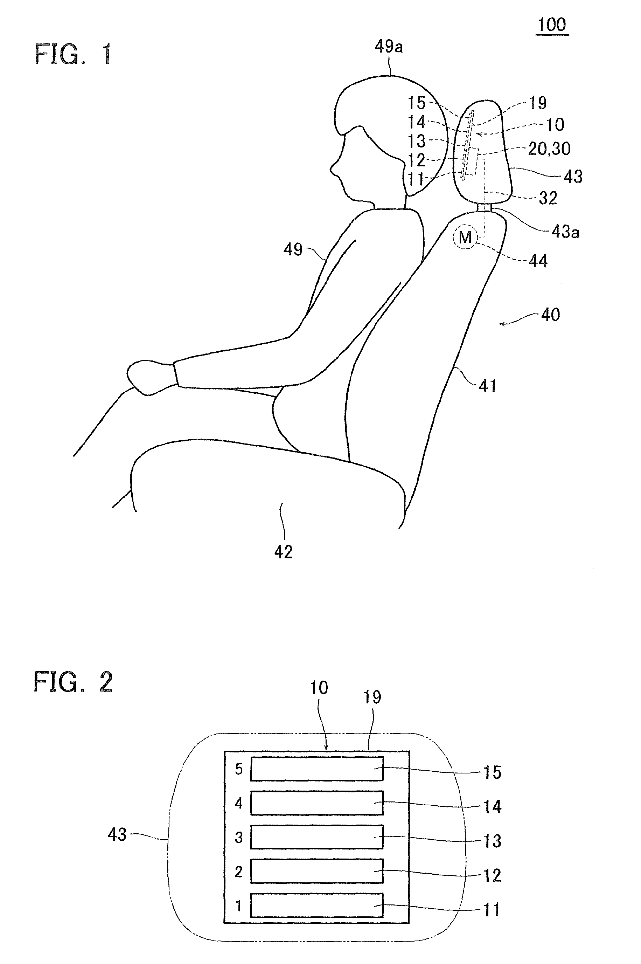

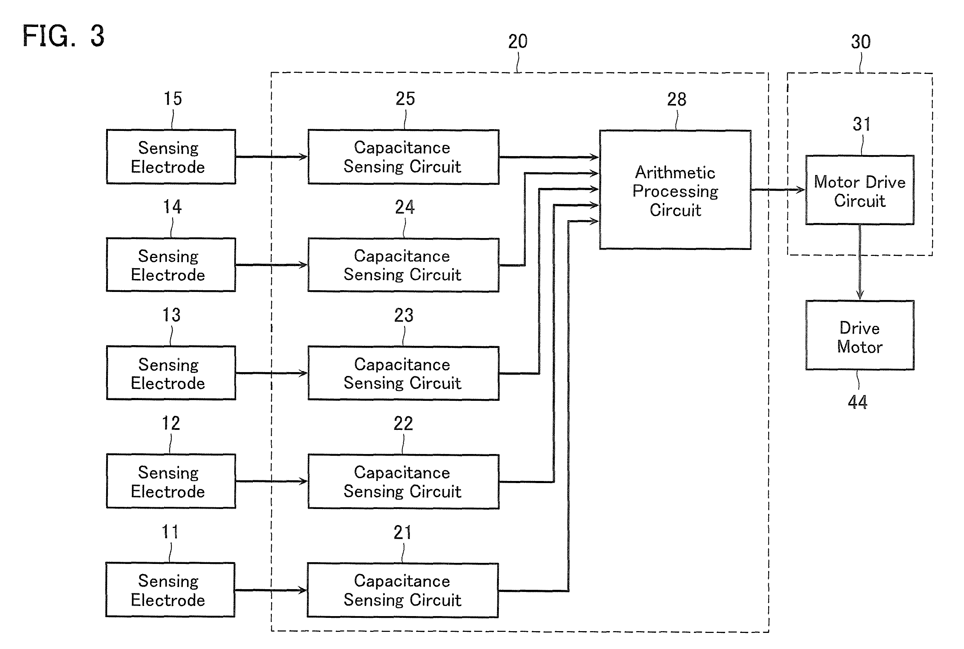

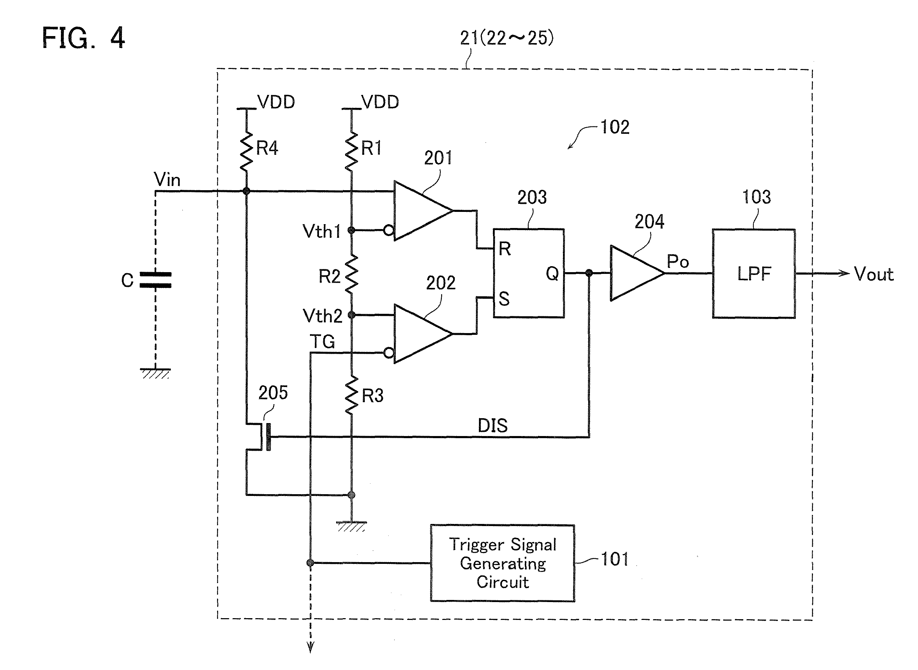

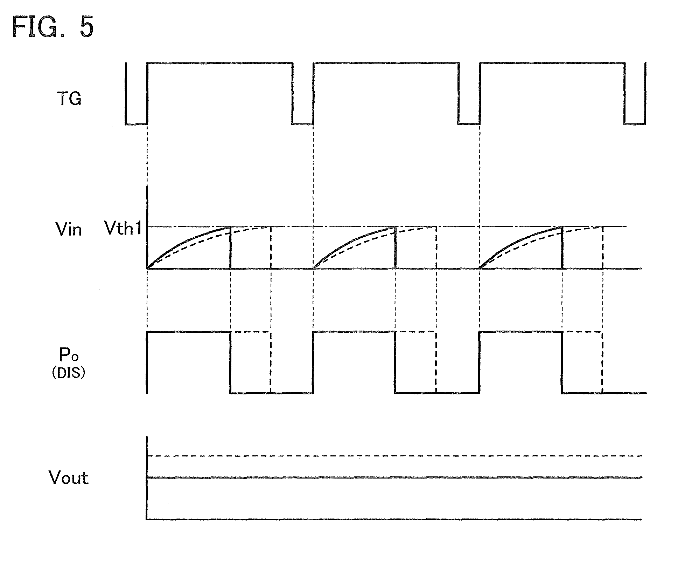

Fig. 1 is a schematic diagram showing an example of a seat of a vehicle on which a headrest position adjustment device according to one embodiment of the present invention is mounted. Fig. 2 is an explanatory diagram showing an example of arrangement of sensing electrodes which are provided side by side along the height direction of the headrest. Fig. 3 is a block diagram showing an example of the whole configuration of the headrest position adjustment device. Fig. 4 is a block diagram showing an example of the configuration of a capacitance sensing circuit of the headrest position adjustment device. Fig. 5 is an operation waveform chart showing an example of operation waveforms of the capacitance sensing circuit shown in Fig. 4.

As shown in Fig. 1 and Fig. 2, the headrest position adjustment device 100 is provided in a seat 40 of a vehicle, etc. The headrest position adjustment device 100 includes a capacitance sensor unit 10 which is provided in a headrest 43 of the seat 40, and a drive motor 44 which is provided in a backrest 41 of the seat 40. The headrest position adjustment device 100 also includes a control unit 30 which controls driving of the drive motor 44 based on a detection result of the capacitance sensor unit 10.
In the present example, the control unit 30 is configured integrally with the capacitance sensor unit 10 and provided on the headrest 43 side. The control unit 30 and the drive motor 44 are electrically connected through a harness 32.

The capacitance sensor unit 10 includes a plurality of sensing electrodes 11 to 15 which are formed on one surface of a substrate 19 for example, and a detecting circuit 20 formed on the other surface of the substrate 19. The capacitance sensor unit 10 senses the capacitance between a head 49a of a person 49 sitting on a sitting portion 42 of the seat 40 and the headrest 43 (more specifically, the sensing electrodes 11 to 15). Thus, the capacitance sensor unit 10 detects the height position of the head 49a with respect to the headrest 43. That is, the capacitance sensor unit 10 senses, at each of the sensing electrodes 11 to 15, the value of capacitance that varies according to the non-flatness of the occipital region, and detects the height position of the head 49a with respect to the headrest 43.

The substrate 19 is made of, for example, a flexible printed board, a rigid substrate, or a rigid flexible substrate. The plurality of sensing electrodes 11 to 15 are made of copper, copper alloy, or aluminum patterned on the substrate 19 which is made of an insulator such as polyethylene terephthalate (PET), polyethylene naphthalate (PEN), epoxy resin, or the like.

The plurality of sensing electrodes 11 to 15 are formed into, for example, a rectangular shape. The plurality of sensing electrodes 11 to 15 are arranged in a front portion of the headrest 43 in the state that their longer direction is orthogonal to the height direction of the headrest 43 and that they are arranged side by side along the height direction of the headrest 43. For example, electrode numbers 1 to 5 are assigned to the plurality of sensing electrodes 11 to 15 respectively. In the present example, the plurality of sensing electrodes 11 to 15 include five electrodes. However, the number is not limited to this, but it is only necessary that such a number of electrodes be provided as are needed to detect the height direction of the head 49a of the person 49 sitting on the seat 40 while the headrest 43 is at rest, or more electrodes may be provided.

As shown in Fig. 3, the detecting circuit 20 includes a plurality of capacitance sensing circuits 21 to 25 which are connected one-to-one to the plurality of sensing electrodes 11 to 15 and output information indicative of the capacitance sensed by the respective sensing electrodes 11 to 15. The detecting circuit 20 also includes an arithmetic processing circuit 28 which is connected to these capacitance sensing circuits 21 to 25 and detects (calculates) the height position of the head 49a with respect to the headrest 43 based on the information output by the capacitance sensing circuits 21 to 25.
The control circuit 30 includes a motor drive circuit 31 which is connected to the arithmetic processing circuit 28 and controls driving of the drive motor 44 based on a detection result (calculation result) of the arithmetic processing circuit 28.
The drive motor 44 moves the headrest 43 upward or downward based on a control signal output by the motor drive circuit 31.

The capacitance sensing circuits 21 to 25 for outputting information indicative of the capacitance sensed by the sensing electrodes 11 to 15 output a sensing signal by generating and smoothing a pulse signal having a duty ratio which changes according to the capacitance between the sensing electrodes 11 to 15 and the head 49a.

As shown in Fig. 4, each capacitance sensing circuit 21 (22 to 25) includes a trigger signal generating circuit 101 which outputs a trigger signal TG having a constant period, for example. Each capacitance sensing circuit 21 (22 to 25) also includes a timer circuit 102 which outputs a pulse signal Po having a duty ratio which changes according to the level of the capacitance C connected to an input terminal, and a low-pass filter (LPF) 103 which smoothes the pulse signal Po.

The timer circuit 102 includes, for example, two comparators 201 and 202, and an RS flip-flop (hereinafter referred to as "RS-FF") 203 which receives the outputs from these comparators 201 and 202 at its reset terminal R and its set terminal S respectively. The timer circuit 102 also includes a buffer 204 which outputs an output DIS of the RS-FF 203 to the LPF 103, and a transistor 205 which is controlled between on and off according to the output DIS of the RS-FF 203.

The comparator 202 compares the trigger signal TG shown in Fig. 5 which is output by the trigger signal generating circuit 101 with a certain threshold Vth2 divided by resistors R1, R2, and R3, and outputs a set pulse synchronized with the trigger signal TG. This set pulse sets the Q output of the RS-FF 203.

The Q output as a discharge signal DIS turns off the transistor 205. Thus, the sensing electrode 11 (12 to 15) and the ground are electrically charged therebetween at a speed defined by a time constant set by the to-ground capacitance C of the sensing electrode 11 (12 to 15) and a resistor R4 connected between the input terminal and a power supply line. Accordingly, the potential of an input signal Vin rises at a speed defined by the capacitance C.

When the input signal Vin exceeds a threshold Vth1 defined by the resistors R1, R2, and R3, the output of the comparator 201 is inverted, thereby inverting the output of the RS-FF 203. As a result, the transistor 205 is turned on, and the charges accumulated in the sensing electrode 11 (12 to 15) are discharged through the transistor 205.

Hence, the timer circuit 102 outputs a pulse signal Po which, as shown in Fig. 5, oscillates at a duty ratio that is based on the capacitance C between the sensing electrode 11 (12 to 15) and the head 49a of the person 49 coming close to the sensing electrode. The LPF 103 outputs a direct-current sensing signal Vout shown in Fig. 5 by smoothing the pulse signal Po. Note that in Fig. 5, a waveform indicated by a solid line and a waveform indicated by a dotted line show that the former has a smaller capacitance than that of the latter, and, for example, the latter represents a condition that an object is coming close.

The arithmetic processing circuit 28 detects the height position of the head 49a with respect to the headrest 43 based on the sensing signals Vout from the respective capacitance sensing circuits 21 to 25.
The arithmetic processing circuit 28 includes, for example, a CPU, a RAM, a ROM, etc., and compares the sensing signals from the respective capacitance sensing circuits 21 to 25. That is, the arithmetic processing circuit 28 compares the values of capacitances (capacitance values C1 to C5) sensed by the sensing electrodes 11 to 15.
When the smallest value among the capacitance values C1 to C5 is equal to or greater than a threshold, the arithmetic processing circuit 28 compares the capacitance values C1 to C5 and calculates the height position of the sensing electrode having sensed the largest capacitance as an estimated height-direction center position of the head 49a. Then, the arithmetic processing circuit 28 detects the height position of the head 49a based on this calculation result, and outputs the detection result to the motor drive circuit 31.
On the other hand, when the smallest value among the capacitance values C1 to C5 is smaller than the threshold, the arithmetic processing circuit 28 compares the value of capacitance (capacitance value C5) sensed by the sensing electrode 15 located at the uppermost position among the sensing electrodes 11 to 15 arranged side by side along the height direction of the headrest 43 with the value of capacitance (capacitance value C1) sensed by the sensing electrode 11 located at the lowermost position. Then, the arithmetic processing circuit 28 detects the height position of the head 49a based on a ratio between these two capacitance values, and outputs the detection result to the motor drive circuit 31.

The motor drive circuit 31 controls driving of the drive motor 44 based on the detection result (calculation result) of the arithmetic processing circuit 28 to adjust the upward/downward-direction position of the headrest 43 with respect to the backrest 41 of the seat 40. The drive motor 44 can be configured to drive a support shaft 43a of the headrest 43 to move in the upward and downward direction, the leftward and rightward direction, and frontward and rearward direction.

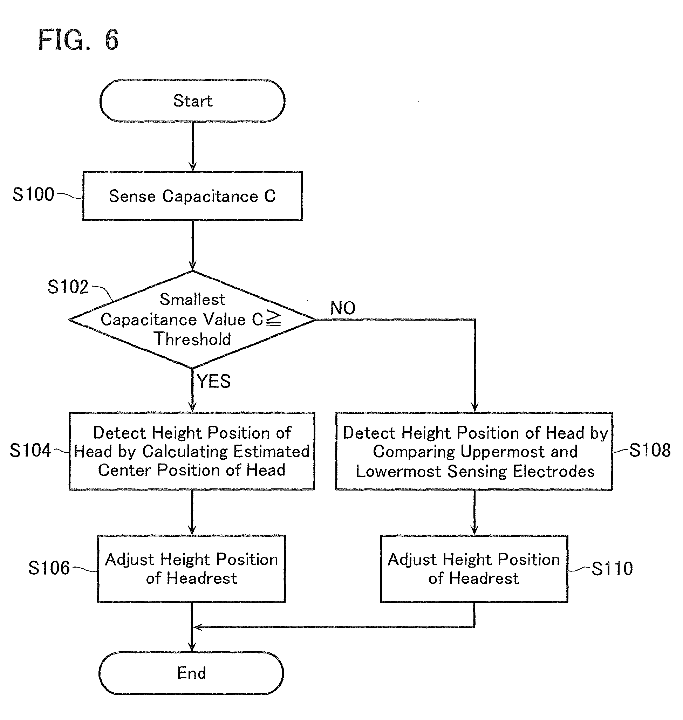

Next, an operation of the headrest position adjustment device 100 according to the present embodiment will be explained with reference to the flowchart shown in Fig. 6.
First, the drive motor 44 is driven to move the headrest 43 to an initial position (for example, the highest position that can be reached by the headrest 43 from the backrest 41). After this, at this initial position, the respective sensing electrodes 11 to 15 of the capacitance sensor unit 10 sense the capacitance C between themselves and the head 49a (S100). Then, the arithmetic processing circuit 28 judges whether the smallest value among the values of capacitances (capacitance values C1 to C5) sensed by the sensing electrodes 11 to 15 is equal to or greater than a threshold, or is smaller than the threshold, based on sensing signals from the capacitance sensing circuits 21 to 25 (S102).
When it is judged in step S102 that the smallest value is equal to or greater than the threshold, the arithmetic processing circuit 28 compares the capacitance values C1 to C5. Then, the arithmetic processing circuit 28 calculates an estimated height-direction center position of the head 49a and detects the height position of the head 49a with respect to the headrest 43 (S104). Then, the motor drive circuit 31 controls the drive motor 44 based on this detection result to adjust the upward/downward-direction position of the headrest 43 (S106).
When it is judged in step S102 that the smallest value is smaller than the threshold, the arithmetic processing circuit 28 compares the value of capacitance (capacitance value C5) sensed by the sensing electrode 15 located at the uppermost position among the sensing electrodes 11 to 15 arranged side by side along the height direction of the headrest with the value of capacitance (capacitance value C1) sensed by the sensing electrode 11 located at the lowermost position. Then, the arithmetic processing circuit 28 detects the height position of the head 49a with respect to the headrest 43 based on the ratio between these capacitance values (S108). Then, the motor drive circuit 31 controls the drive motor 44 based on this detection result to adjust the upward/downward-direction position of the headrest 43 (S110).

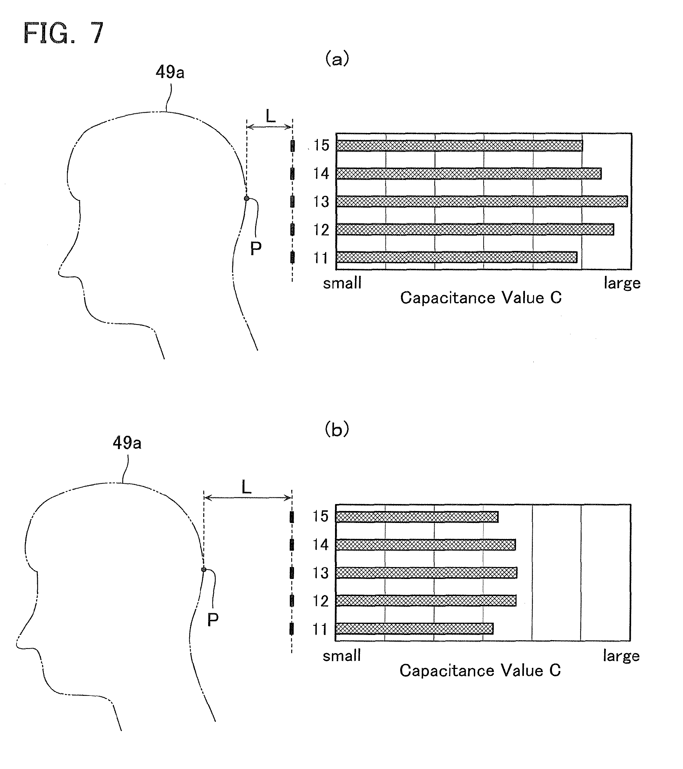

Here, an example of outputs from the capacitance sensor unit 10 will be explained with reference to the graph of capacitance values shown in Fig. 7.
Fig. 7(a) shows the capacitance values C sensed by the sensing electrodes 11 to 15 when the distance L between the headrest 43 and the head 49a is within a certain range (for example, L=about 50mm). Fig. 7(b) shows the capacitance values C sensed by the sensing electrodes 11 to 15 when the distance L between the headrest 43 and the head 49a is not within the certain range (for example, L=about 70mm).

As shown in Fig. 7(a), when the distance L between the headrest 43 and the head 49a is about 50mm, i.e., when the distance between the headrest 43 and the head 49a is within the certain range, the differences among the capacitance values sensed by the sensing electrodes 11 to 15 are apparent. Hence, a graph of capacitance values which vary according to the non-flatness of the occipital region is obtained. Therefore, it is possible to presume the occipital shape of the head 49a and estimate the height position of the center P of the occipital region based on the capacitance values sensed by the sensing electrodes 11 to 15.
That is, when the distance L is about 50mm, an estimated height-direction center position of the head 49a is calculated based on the values of capacitances sensed by the sensing electrodes 11 to 15. Based on this calculation result, the height position of the head 49a with respect to the headrest 43 can be detected and the position of the headrest 43 can be adjusted.

However, as shown in Fig. 7(b), when the distance between the headrest 43 and the head 49a is about 70mm, i.e., when the distance between the headrest 43 and the head 49a is not within the certain range, the differences among the capacitance values C sensed by the sensing electrodes 11 to 15 are vague. Therefore, an accurate estimated height-direction center position of the head 49a is hard to obtain.
Particularly, in the region close to the height position of the center P of the occipital region, it might be impossible to obtain a large/small relationship of the capacitance values that corresponds to the non-flatness of the head due to an influence of disturbance.
In this way, a change of merely about 20mm in the distance between the head 49a and the front surface of the headrest 43 makes it difficult to detect the height position of the head 49a with respect to the headrest 43. Therefore, it becomes difficult to adjust the position of the headrest.

On the other hand, the ratio (or the difference) between the capacitance value C5 sensed by the sensing electrode 15 located at the uppermost position among the sensing electrodes 11 to 15 arranged side by side in the height direction of the headrest 43 and the capacitance value C1 sensed by the sensing electrode 11 located at the lowermost position is not greatly influenced by the distance L between the headrest 43 and the head 49a. Accordingly, similar ratios are obtained when the distance L is about 50mm and when the distance L is about 70mm.

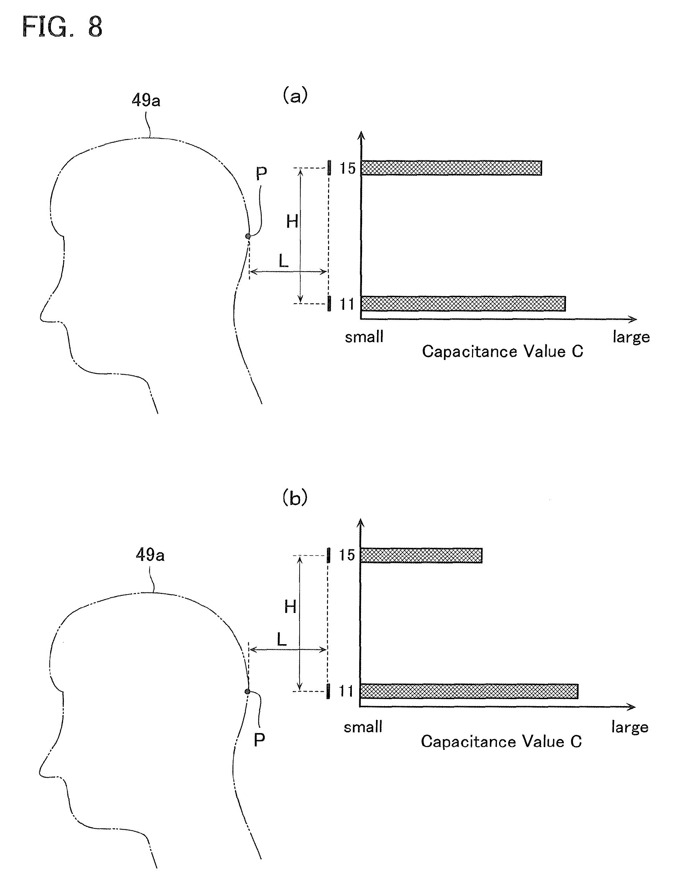

That is, when the distance L between the headrest 43 and the head 49a is large (L=about 70mm), the values of capacitances (capacitance value C1 and capacitance value C5) sensed by the sensing electrodes 11 and 15 are compared as shown in Fig. 8(a). When the height position of the center P of the occipital region of the head 49a is substantially equal to the height-direction center of the headrest 43, both of the capacitance values are substantially equal. When the height position of the center P of the occipital region of the head 49a is off the center of the headrest 43 and substantially equal to the center of the sensing electrode 11 as shown in Fig. 8(b), the ratio between the capacitance sensed by the sensing electrode 11 and the capacitance sensed by the sensing electrode 15 becomes large.

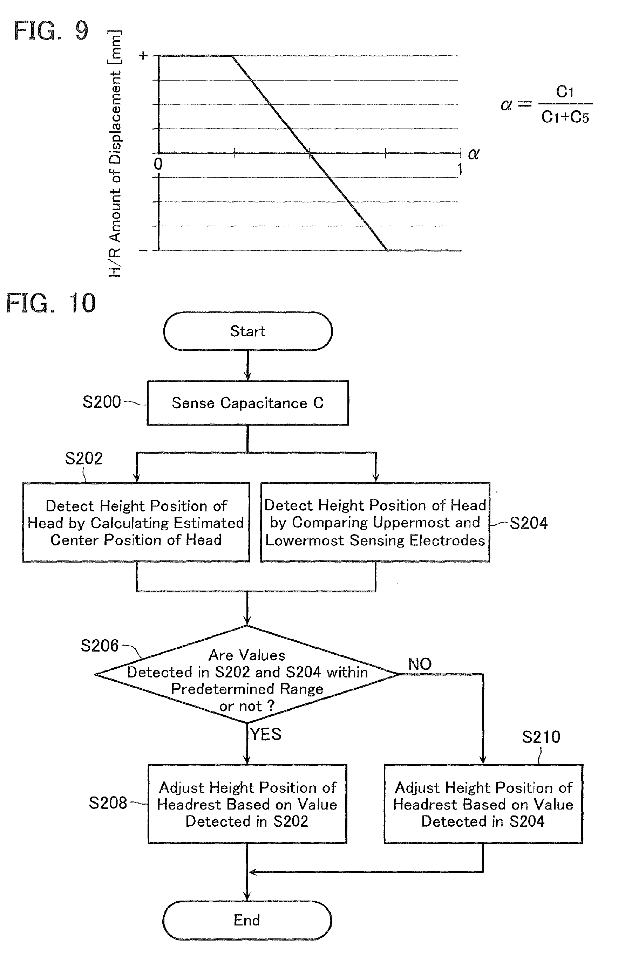

The position of the head 49a with respect to the headrest 43 is detected based on the ratio obtained in this way between the values of capacitances sensed by the two sensing electrodes 11 and 15. The adjustment scheme for adjusting the upward/downward-direction position of the headrest based on this detection result can be represented as shown in Fig. 9.
Fig. 9 is an explanatory diagram for explaining the adjustment scheme of the headrest position adjustment device 100 according to the present embodiment implemented in steps S108 and S110 described above. As shown in Fig. 9, the ratio α between the capacitance value C1 sensed by the sensing electrode 11 provided at a lower portion of the headrest 43 and the capacitance value C5 sensed by the sensing electrode 15 provided at an upper portion can be obtained by α=C1/C1+C5. The amount of displacement (mm) of the headrest 43 can be determined based on the ratio α obtained in this way.

That is, assume that the amount of displacement is 0mm when the height position of the center P of the occipital region of the head 49a is horizontally equal to the height position of the center of the headrest 43. In this case, control signals are output to the drive motor 44 such that the headrest 43 is displaced in the upward direction (+ direction) when the ratio α is close to 0, while the headrest 43 is displaced in the downward direction (- direction) when the ratio α is close to 1.

In the headrest position adjustment device 100 according to the present embodiment, the threshold used as the judgment criterion in step S102 described above is set to, for example, the smallest value among the values of capacitances (capacitance values C1 to C5) that are sensed by the sensing electrodes 11 to 15 when the distance between the headrest 43 and the head 49a is about 60mm. Thereby, the judgment of whether the distance between the headrest 43 and the head 49a is within the certain range or not can be made based on the values of capacitances sensed by the sensing electrodes 11 to 15.
For example, when the distance between the headrest 43 and the head 49a is equal to or smaller than 60mm, i.e., when the distance is within the certain range and the smallest value among the capacitance values C1 to C5 is equal to or greater than the threshold, the height position of the head is detected through steps S104 and S106 described above. When the distance between the headrest 43 and the head 49a is greater than 60mm, i.e., when the distance is not within the certain range and the smallest value among the capacitance values C1 to C5 is smaller than the threshold, the height position of the head is detected through steps S108 and S110 described above. In this way, the height position of the head 49a can be obtained.
This makes it possible to highly precisely adjust the position of the headrest 43 with a simple configuration and prevent accidents due to failure to adjust the position of the headrest 43, such as cervical spine injury of the person 49 in a car crash or the like.

The headrest position adjustment device 100 according to the present embodiment may adjust the height position of the headrest 43 as shown in the flowchart of Fig. 10. That is, first, the headrest 43 is moved to, for example, the initial position (the highest position that can be reached by the headrest 43 from the backrest 41). After this, at this initial position, the respective sensing electrodes 11 to 15 of the capacitance sensor unit 10 sense the capacitance C between themselves and the head 49a (S200).
Then, the values of capacitances (capacitance values C1 to C5) sensed by the sensing electrodes 11 to 15 are compared. Then, an estimated height-direction center position of the head 49a is calculated, and based on the calculation result, the height position of the head 49a with respect to the headrest 43 is detected (S202). At the same time, the capacitance value C5 sensed by the sensing electrode 15 located at the uppermost position and the capacitance value C1 sensed by the sensing electrode 11 located at the lowermost position are compared. Based on the ratio between these values, the height position of the head 49a with respect to the headrest 43 is detected (S204).
Next, the value detected in step S202 and the value detected in step S204 are compared. Then, it is judged whether both the values are equal or an error between them is within a predetermined range or not (S206).
When it is judged in step S206 that the values are equal or an error between them is within the predetermined range, the motor drive circuit 31 controls the drive motor 44 based on the value detected in step S202 and adjusts the upward/downward-direction position of the headrest 43 (S208).
When it is judged in step S206 that the error between the values are not within the predetermined range, the motor drive circuit 31 controls the drive motor 44 based on the value detected in step S204 and adjusts the upward/downward-direction position of the headrest 43 (S210).

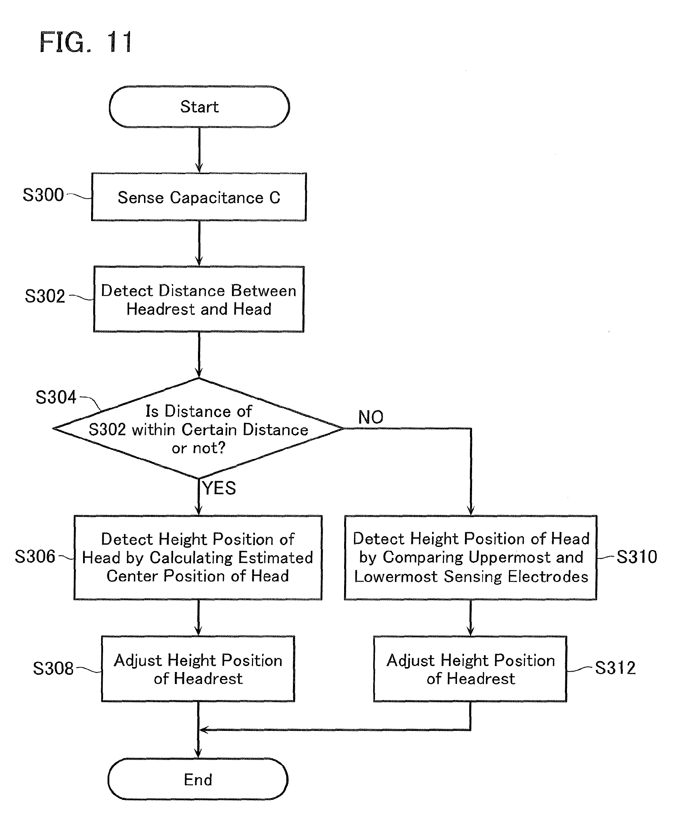

The headrest position adjustment device 100 according to the present embodiment may be separately provided with a distance sensor (not illustrated) for detecting the distance between the headrest and the head. The distance sensor may be an infrared sensor, a pyroelectric ultraviolet sensor, an optical sensor, an ultrasonic sensor, etc.
When provided with a distance sensor separately, the headrest position adjustment device 100 according to the present embodiment may adjust the height position of the headrest 43 as shown in the flowchart of Fig. 11. That is, first, the headrest 43 is moved to, for example, the initial position (the highest position that can be reached by the headrest 43 from the backrest 41). After this, at this initial position, the respective sensing electrodes 11 to 15 of the capacitance sensor unit 10 sense the capacitance C between themselves and the head 49a (S300). At the same time, the distance sensor detects the distance between the headrest and the head (S302). Then, it is judged whether the distance detected by the distance sensor is within a certain distance or not (S304).
When it is judged in step S304 that the distance is within the certain distance, an estimated height-direction center position of the head 49a is calculated based on the capacitance values C1 to C5 sensed by the sensing electrodes 11 to 15. Based on this calculated value, the height position of the head 49a with respect to the headrest 43 is detected (S306). Based on this detection result, the motor drive circuit 31 controls the drive motor 44 and adjusts the upward/downward-direction position of the headrest 43 (S308).
When it is judged in step S304 that the distance is greater than the certain distance, the capacitance value C5 sensed by the sensing electrode 15 located at the uppermost position and the capacitance value C 1 sensed by the sensing electrode 11 located at the lowermost position are compared. Based on the ratio between these values, the height position of the head 49a with respect to the headrest 43 is detected (S310). Then, based on this detection result, the motor drive circuit 31 controls the drive motor 44 to adjust the upward/downward-direction position of the headrest 43 (S312).

In the present example, the capacitance sensor unit 10 and drive motor 44 of the headrest position adjustment device 100 are connected through the harness 29. However, they may be configured wirelessly controllable, for example. Alternatively, the drive motor 44 may be configured integrally with the capacitance sensor unit 10 and provided on the headrest 43 side.

In the detection of the height position of the head based on its estimated center position, the detecting circuit 20 controls the headrest 43 to be moved such that its center position comes to the estimated center position mentioned above. Alternatively, the arithmetic processing circuit 28 may profile the occipital shape of the head 49a, calculate the estimated center position mentioned above based on the profiling result, and control the headrest 43 to be moved based on this calculation result. Yet alternatively, the detecting circuit 20 may control the headrest 43 to be moved such that an arbitrary position thereof comes to the estimated center position mentioned above, based on preset profile information about the person 49 (including information about the occipital shape of the head 49a) and information about the shape of the headrest 43.

Further, in the detection of the height position of the head with respect to the headrest 43 based on the comparison between the capacitance value sensed by the sensing electrode 15 located at the uppermost position and the capacitance value sensed by the sensing electrode 11 located at the lowermost position, the detecting circuit 20 may calculate an output ratio α based on the total of the outputs (capacitance values) from the sensing electrode 15 located at the uppermost position and the two sensing electrodes 14 and 13 counted from the sensing electrode 15 and the total of the outputs (capacitance values) from the sensing electrode 11 located at the lowermost position and the two sensing electrodes 12 and 13 counted from the sensing electrode 11. Then, the detecting circuit 20 may likewise detect the height position of the head 49a.

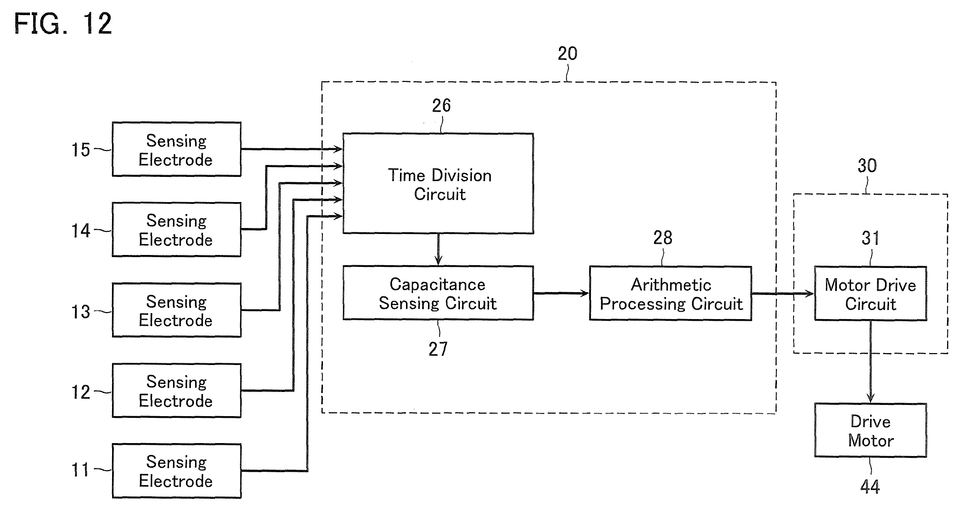

Fig. 12 is a block diagram showing another example of the whole configuration of the headrest position adjustment device according to one embodiment of the present invention. In the following explanation, any portions that are the same as the portions already explained will be denoted by the same reference numerals and will not be explained again. As shown in Fig. 12, the detecting circuit 20 includes a time division circuit 26 connected to the sensing electrodes 11 to 15. The detecting circuit 20 also includes a capacitance sensing circuit 27 which outputs respective sensing signals (information indicative of capacitance) that are sensed by the sensing electrodes 11 to 15 intertemporally by means of the time division circuit 26. The detecting circuit 20 also includes an arithmetic processing circuit 28 which detects the height position of the head 49a with respect to the headrest 43 by comparing the values of capacitances that are based on the sensing signals output by the capacitance sensing circuit 27.

With this configuration of the detecting circuit 20, when detecting the height position of the head with respect to the headrest based on an estimated center position of the head, the detecting circuit 20 scans the capacitances at the respective sensing electrodes 11 to 15 in order through the time division circuit 26. Based on the scanning result, the detecting circuit 20 can obtain an estimated height-direction center position of the head 49a. Meanwhile, when detecting the height position of the head from the values of capacitances sensed by the sensing electrodes 11 and 15 positioned at the lower most position and the uppermost position, the detecting circuit 20 includes: the time division circuit 26 which is connected to the sensing electrodes 11 and 15; the capacitance sensing circuit 27 which outputs information indicative of the capacitances that are, for example, intertemporally sensed by the sensing electrodes 11 and 15 by means of the time division circuit 26; and the arithmetic processing circuit 28 which calculates the height position of the head 49a by comparing the capacitances that are based on the information output by the capacitance sensing circuit 27. Hence, also with this detecting circuit 20 having such a configuration, it is possible to adjust the position of the headrest 43 highly precisely in a short time.

In the embodiment described above, the explanation has been given by employing as an example a case that the headrest position adjustment device 100 is applied to the headrest 43 of the seat 40 of a vehicle. However, the headrest position adjustment device 100 can also be applied to an attraction vehicle seat, a theater seat, etc. which have a position-adjustable headrest.

### Industrial Applicability

The present invention is useful for a device for adjusting the position of a headrest of an automobile, etc., for performing highly precise position adjustment with a particularly simple configuration.

### Brief Description of the Drawings

[Fig. 1] Fig. 1 is a schematic diagram showing an example of a seat of a vehicle on which a headrest position adjustment device according to one embodiment of the present invention is mounted.
[Fig. 2] Fig. 2 is an explanatory diagram showing an example of arrangement of a plurality of sensing electrodes which are provided side by side in a height direction of a headrest.
[Fig. 3] Fig. 3 is a block diagram showing an example of a whole configuration of the headrest position adjustment device.
[Fig. 4] Fig. 4 is a block diagram showing an example of a configuration of a capacitance sensing circuit of a headrest position adjustment device according to one embodiment of the present invention.
[Fig. 5] Fig. 5 is an operation waveform chart showing an example of operation waveforms of the capacitance sensing circuit shown in Fig. 4.
[Fig. 6] Fig. 6 is a flowchart showing a first mode of operation of the headrest position adjustment device.
[Fig. 7] Fig. 7 is an explanatory diagram for explaining an example of outputs in the case of calculating an estimated center position of a sensing electrode of the headrest position adjustment device.
[Fig. 8] Fig. 8 is an explanatory diagram showing an example of outputs from uppermost and lowermost sensing electrodes among the sensing electrodes of the headrest position adjustment device.
[Fig. 9] Fig. 9 is an explanatory diagram for explaining an adjustment scheme of the headrest position adjustment device according to the present embodiment.
[Fig. 10] Fig. 10 is a flowchart showing a second mode of operation of the headrest position adjustment device.
[Fig. 11] Fig. 11 is a flowchart showing a third mode of operation of the headrest position adjustment device.
[Fig. 12] Fig. 12 is a block diagram showing another example of the whole configuration of the headrest position adjustment device.

### Description of Reference Numerals

- 10: capacitance sensor unit
- 11: sensing electrode
- 12: sensing electrode
- 13: sensing electrode
- 14: sensing electrode
- 15: sensing electrode
- 16: shield electrode
- 19: substrate
- 20: detecting circuit
- 21: capacitance sensing circuit
- 25: capacitance sensing circuit
- 26: time division circuit
- 27: capacitance sensing circuit
- 28: arithmetic processing circuit
- 30: control unit
- 31: motor drive circuit
- 40: seat
- 41: backrest
- 42: sitting portion
- 43: headrest
- 44: drive motor
- 49: person
- 49a: head
- 100: headrest position adjustment device

## Claims

1. A headrest position adjustment device, comprising:
a headrest which is set behind a head of a person sitting on a seat;
a plurality of sensing electrodes which are provided side by side along a height direction of the headrest and which sense capacitance between the head of the person and the headrest;
a detecting circuit which detects a height position of the head with respect to the headrest based on values of capacitances sensed by the plurality of sensing electrodes respectively; and
position adjusting means which adjusts an upward/downward-direction position of the headrest based on a detection result of the detecting circuit,
wherein when a distance between the headrest and the head is within a certain range, the detecting circuit calculates an estimated center position of the head based on the values of capacitances sensed by the plurality of sensing electrodes, and based on a calculated value, detects the height position of the head with respect to the headrest, and
when the distance between the headrest and the head is not within the certain range, the detecting circuit detects the height position of the head with respect to the headrest based on a ratio between the values of capacitances sensed by at least the sensing electrode located at an uppermost position and the sensing electrode located at a lowermost position among the plurality of sensing electrodes.

2. The headrest position adjustment device according to claim 1, wherein when a smallest value among the values of capacitances sensed by the plurality of sensing electrodes is equal to or greater than a threshold, the detecting circuit judges that the distance between the headrest and the head is within the certain range, and
when the smallest value is smaller than the threshold, the detecting circuit judges that the distance between the headrest and the head is not within the certain range.

3. The headrest position adjustment device according to claim 1, wherein the detecting circuit calculates an estimated center position of the head based on the values of capacitances sensed by the plurality of sensing electrodes and based on a calculated value, detects the height position of the head with respect to the headrest, while at the same time detecting the height position of the head with respect to the headrest based on a ratio between the values of capacitances sensed by at least the sensing electrode located at an uppermost position and the sensing electrode located at a lowermost position among the plurality of sensing electrodes,
when both detected values are equal or an error between the detected values is within a predetermined range, the detecting circuit judges that the distance between the headrest and the head is within the certain range, and
when the error between the detected values is greater than the predetermined range, the detecting circuit judges that the distance between the headrest and the head is not within the certain range.

4. The headrest position adjustment device according to claim 1, further comprising distance measuring means which measures the distance between the headrest and the head,
wherein the detecting circuit judges whether the distance between the headrest and the head is within the certain range or not based on a value measured by the distance measuring means.

5. The headrest position adjustment device according to any one of claims 1 to 4,
wherein when the distance between the headrest and the head is not within the certain range, the detecting circuit detects the height position of the head with respect to the headrest based on a ratio between the values of capacitances sensed by the sensing electrode located at an uppermost position and a certain number of sensing electrodes counted from this sensing electrode and the values of capacitances sensed by the sensing electrode located at a lowermost position and the certain number of sensing electrodes counted from this sensing electrode.

6. The headrest position adjustment device according to any one of claims 1 to 5,
wherein each of the plurality of sensing electrodes is formed into a rectangular strip shape, and arranged in a front portion of the headrest such that its longer direction is orthogonal to the height direction of the headrest.

7. A headrest position adjustment method, comprising:
sensing capacitance between a head of a person sitting on a seat and a headrest by a plurality of sensing electrodes which are arranged side by side along a height direction of the headrest;
when a distance between the headrest and the head is within a certain range, calculating an estimated center position of the head based on values of capacitances sensed by the plurality of sensing electrodes respectively, and based on a calculated value, detecting a height position of the head with respect to the headrest;
when the distance between the headrest and the head is not within the certain range, detecting the height position of the head with respect to the headrest based on a ratio between the values of capacitances sensed by at least the sensing electrode located at an uppermost position and the sensing electrode located at a lowermost position among the plurality of sensing electrodes; and
adjusting an upward/downward-direction position of the headrest based on the detected height position of the head with respect to the headrest.

8. The headrest position adjustment method according to claim 7, comprising:
when a smallest value among the values of capacitances sensed by the plurality of sensing electrodes is equal to or greater than a threshold, judging that the distance between the headrest and the head is within the certain range, and
when the smallest value is smaller than the threshold, judging that the distance between the headrest and the head is not within the certain range.

9. The headrest position adjustment method according to claim 7, comprising:
calculating an estimated center position of the head based on the values of capacitances sensed by the plurality of sensing electrodes and based on a calculated value, detecting the height position of the head with respect to the headrest, while at the same time detecting the height position of the head based on the values of capacitances sensed by at least the sensing electrode located at an uppermost position and the sensing electrode located at a lowermost position among the plurality of sensing electrodes;
when both detected values are equal or an error between the detected values is within a predetermined range, judging that the distance between the headrest and the head is within the certain range; and
when the error between the detected values is greater than the predetermined range, judging that the distance between the headrest and the head is not within the certain range.
